# EUROPÄISCHE PATENTANMELDUNG

(11) **EP 3 066 909 A1**
(43) Veröffentlichungstag der Anmeldung: **14.09.2016**
(21) Anmeldenummer: 16151812.1
(22) Anmeldetag: 19.01.2016
(51) Int. Cl.: A01B 15/02, A01B 61/04

(54) **LANDWIRTSCHAFTLICHE MASCHINE UND VERFAHREN ZUM BEFESTIGEN EINES ARBEITSWERKZEUGTEILS EINER SOLCHEN MASCHINE**

(30) Priorität: 13.03.2015 DE 102015003214
(71) Anmelder: PÖTTINGER Landtechnik GmbH, 4710 Grieskirchen (AT)
(72) Erfinder: Berger, Thomas, 4682 Geboltskirchen (AT); Meindlhumer, Wilhelm, 4713 Gallspach (AT); Preimeß, Hans-Jörg, 9811 Lendorf (AT); Wagner, Erwin, 4730 Waizenkirchen (AT)
(74) Vertreter: Thoma, Michael

(57) **Zusammenfassung**

Die vorliegende Erfindung betrifft landwirtschaftliche Arbeitsmaschinen zur Boden- und/oder Erntegutbearbeitung, mit einem mit dem Boden und/oder Erntegut in Eingriff bringbaren Arbeitswerkzeugteil 1, das als Verschleißteil konzipiert und an einem Werkzeugträger 2 lösbar befestigt ist, wobei an dem Arbeitswerkzeug zumindest ein Gewindebolzen 3 starr befestigt ist, der zum lösbaren, kraft- und formschlüssigen Befestigen des Arbeitswerkzeugteils am Werkzeugträger vorgesehen ist. Die Erfindung betrifft ferner ein Verfahren zum Befestigen eines als Verschleißteil konzipierten Arbeitswerkzeugteiles einer solchen landwirtschaftlichen Maschine. Erfindungsgemäß ist der Gewindebolzen allein mit seiner Stirnseite und direkt an dem Arbeitswerkzeugteil angeschweißt.

## Beschreibung

Die vorliegende Erfindung betrifft landwirtschaftliche Arbeitsmaschinen zur Boden- und/oder Erntegutbearbeitung, mit einem mit dem Boden und/oder Erntegut in Eingriff bringbaren Arbeitswerkzeugteil, das als Verschleißteil konzipiert und an einem Werkzeugträger lösbar befestigt ist, wobei an dem Arbeitswerkzeug zumindest ein Gewindebolzen starr befestigt ist, der zum lösbaren, kraft- und formschlüssigen Befestigen des Arbeitswerkzeugteils am Werkzeugträger vorgesehen ist. Die Erfindung betrifft ferner ein Verfahren zum Befestigen eines als Verschleißteil konzipierten Arbeitswerkzeugteiles einer solchen landwirtschaftlichen Maschine.

Ein solches als Verschleißteil konzipiertes Arbeitswerkzeugteil kann insbesondere ein Pflugkörper eines Pflugs sein, der unter bekanntermaßen hohen Kräften in das Erdreich eintaucht, um dieses umzupflügen und dabei vom Erdreich überstrichen wird und entsprechendem Verschleiß unterliegt. In ähnlicher Weise kann ein solches Verschleißteil ein Streichblech sein, das an einem Pflugkörper angebracht ist und das vom bereits angeschnittenen Erdreich überstrichen wird. Solche als Verschleißteil konzipierten Arbeitswerkzeugteile sind üblicherweise starr an einem Werkzeugträger lösbar befestigt, um bei entsprechendem Verschleiß ausgetauscht werden zu können. Hierbei ist es vorteilhaft, zur Befestigung Schraubbolzen zu verwenden, die einerseits einfach gelöst werden können und hierdurch den Austausch montagetechnisch erleichtern, andererseits aber das Arbeitswerkzeugteil ausreichend fest am Werkzeugträger halten können. Durch Anziehen einer Schraubenmutter kann das Arbeitswerkzeugteil formschlüssig und kraftschlüssig am Werkzeugträger befestigt werden.

In entsprechender Weise können aber nicht nur Bodenwerkzeugteile von Bodenbearbeitungsgeräten konzipiert und befestigt sein, sondern auch entsprechend dem Verschleiß unterliegende Arbeitswerkzeugteile von Grünland- bzw. Erntegutbearbeitungsmaschinen, die vom vorbeistreichenden Erntegut oder darin liegenden Erdklumpen oder Steinen verschlissen werden, beispielsweise Schneidmesser von Schneidwerken, Gleitkufen von Tastfahrwerken oder Rechzinken von Heuwerbungsmaschinen, die mittels entsprechender Schraubbolzenverbindungen befestigt werden können.

Herkömmlicherweise werden dabei in dem zu befestigenden Verschleißteil Aufnahmebohrungen vorgesehen, in denen die Schraubbolzen mit Bolzenköpfen zumindest teilweise versenkt aufgenommen werden können, um von der Arbeitsfläche nicht zu weit vorzustehen und das vorbeistreichende Erdreich bzw. Erntegut nicht übermäßig zu behindern. Die Gewindebolzen-Aufnahmebohrungen werden hierbei gerne leicht konisch konturiert, um ein Durchfallen der Schraubbolzen zu verhindern und ein spielfreies, klemmendes Sitzen der Bolzen zu gewährleisten, wodurch sich ein besonders fester Sitz des Arbeitswerkzeugteiles ergibt. Derartige BolzenEinstecklöcher haben jedoch eine hohe Kerbwirkung, die bei den hohen auftretenden Kräften auf das Verschleißteil eine Rissbildung zur Folge haben kann. Diese Problematik verschärft sich insbesondere dadurch, dass derartige Verschleißteile regelmäßig aus hochlegierten und damit zur Sprödigkeit neigenden Werkstoffen gefertigt und bisweilen auch noch oberflächenvergütet sind, was die Rissbildungsneigung aufgrund hoher Sprödigkeit noch weiter verschärft.

Es wurde insofern bereits angedacht, auf derartige Aufnahmebohrungen zu verzichten und die Schraubbolzen nicht mehr durch das zu befestigende Arbeitswerkzeugteil hindurchzustecken, sondern daran zu verkleben, anzuschweißen oder gusstechnisch anzuformen.

Beispielsweise schlägt die Schrift DE 10 2011 011 380 A1 einen Pflugkörper vor, an dessen Rückseite Befestigungshaken angeschweißt oder angeschmiedet werden sollen. Um beim Anschweißen die notwendige Festigkeit zu erreichen, ist der Befestigungshaken an einer Zwischen- bzw. Befestigungsplatte angebracht, die wiederum rundum am Arbeitswerkzeugteil angeschweißt wird, wodurch die Schweißverbindung eine ausreichend große Fläche und damit ausreichend hohe Festigkeit erhält. Problematisch ist hierbei jedoch der relativ hohe Wärmeeintrag in den Pflugkörper, der zu einem Verziehen des Pflugkörpers führen kann. Zudem kann es bei hochlegierten, oberflächenvergüteten Pflugkörpern durch den hohen Wärmeeintrag zu Rissbildungen bzw. Verschlechterung der Oberflächenvergütung kommen, während gleichzeitig aufgrund des hochfesten Pflugscharwerkstoffs eine ausreichende Festigkeit der Schweißverbindungen nicht erreicht wird. Hiervon abgesehen sind die von der genannten Schrift vorgeschlagenen Befestigungshaken nachteilig hinsichtlich einer wirklich spielfreien, hochfesten Befestigung des Pflugschars am Werkzeugträger, da es an der Erzeugung einer entsprechenden Spannkraft fehlt. Die Befestigungshaken können am Werkzeugträger nur formschlüssig eingehakt werden, jedoch den Pflugkörper nicht kraftschlüssig gegen den Werkzeugträger ziehen.

Ferner schlägt die Schrift EP 15 86 229 B1 ein Streichblech für Pflugschare vor, das mittels eines Schraubbolzens an einem Werkzeugträger befestigt werden soll. Der Schraubbolzen soll dabei - um die vorgenannten Probleme beim Anschweißen zu vermeiden - an dem Streichblech festgeklebt werden. Um der Klebeverbindung ausreichende Festigkeit zu geben, sitzt der Schraubbolzen in einer Befestigungsplatte, die mit ausreichend großer Klebefläche an der Oberfläche des Streichblechs festgeklebt werden kann. In der Praxis hat sich jedoch gezeigt, dass sich die Klebestellen trotz der genannten Flächenvergrößerung mittels Klebeplatte in Folge der hohen Beanspruchung lösen und hierdurch die Streichbleche im Feld verloren gehen.

Hiervon ausgehend liegt der vorliegenden Erfindung die Aufgabe zugrunde, eine verbesserte landwirtschaftliche Maschine sowie ein verbessertes Verfahren zum Befestigen der Verschleißteile einer solchen Maschine an deren Werkzeugträger zu schaffen, die Nachteile des Standes der Technik vermeiden und letzteren in vorteilhafter Weise weiterbilden. Insbesondere soll eine hochfeste, form- und kraftschlüssige Befestigung des Verschleißteils geschaffen werden, die keine Rissbildung oder Bauteilverzug provoziert, einfach, reproduzierbar herstellbar ist und dennoch die ausreichende Widerstandsfähigkeit und Zähigkeit gegen hohe Beanspruchungen im Feldbetrieb besitzt.

Diese Aufgabe wird erfindungsgemäß durch eine landwirtschaftliche Maschine gemäß Anspruch 1 sowie ein Verfahren gemäß Anspruch 9 gelöst. Bevorzugte Ausgestaltungen der Erfindung sind Gegenstand der abhängigen Ansprüche.

Es wird also vorgeschlagen, einen Gewindebolzen ohne Zwischenschaltung von Bolzenträgerteilen, die die Schweißfläche vergrößern würden, direkt an dem Arbeitswerkzeugteil anzuschweißen. Erfindungsgemäß ist der Gewindebolzen allein mit seiner Stirnseite und direkt an dem Arbeitswerkzeugteil angeschweißt. Hierdurch wird der Wärmeneintrag in dem spröden, rissempfindlichen Arbeitswerkzeugteil stark reduziert, wobei überraschenderweise trotz der relativ kleinen, begrenzten Schweißfläche eine ausreichende Festigkeit der Gewindebolzenbefestigung erzielt wird. Dies kann durch eine spezielle Gestaltung des Anschweißverfahrens erzielt werden. Erfindungsgemäß wird der Gewindebolzen mit einer im unverschweißten Zustand noch unebenen Stirnseite ausgebildet und mit dieser Stirnseite an das Arbeitswerkzeugteil gesetzt, wobei an das Arbeitswerkzeugteil und den Gewindebolzen eine elektrische Schweißspannung gelegt wird und der Gewindebolzen ein Stück weit von dem Arbeitswerkzeugteil abgehoben wird, sodass sich ein die Gewindebolzenstirnseite und/oder das Arbeitswerkzeugteil partiell aufschmelzender Lichtbogen bildet. Durch die uneben gestaltete Stirnseite des noch unverschweißten Gewindebolzens kann ein vollständiges Aufschmelzen des erhabenen Stirnseitenabschnitts erreicht und damit eine hochfeste Schweißverbindung erzielt werden.

Insbesondere kann in Weiterbildung der Erfindung die Stirnseite des noch unverschweißten Gewindebolzens ballig, insbesondere kegelig ausgebildet und/oder mit einer zentralen Erhöhung versehen sein, sodass der zentral vorstehende Stirnseitenabschnitt bevorzugt aufschmilzt und sich das Schweißbad gleichmäßig über den Stirnseitenquerschnitt des Gewindebolzens ausbreitet. Vorteilhafterweise kann sich die Schweißnaht zwischen dem Arbeitswerkzeugteil und dem Gewindebolzen vollflächig über die Stirnseite des Gewindebolzens erstrecken, sodass eine hohe Festigkeit trotz der an sich geringen Querschnittsfläche der Schweißung erreicht wird. Durch eine solche stirnseitig vollflächige Verschweißung können Schweißnahtfestigkeiten erreicht werden, die höher als die Bolzenzugfestigkeit ist. Bei entsprechenden Zugfestigkeitstests, bei denen der Schraubbolzen näherungsweise parallel zu seiner Längsrichtung vom Arbeitswerkzeugteil weggezogen wird, hat sich überraschenderweise gezeigt, dass der Bolzen bricht bevor die Schweißnaht bricht.

Vorteilhafterweise können mehr als 75% der Stirnseitenfläche des Gewindebolzens mit dem Arbeitswerkzeugteil verschweißt sein, wobei vorteilhafterweise auch zumindest näherungsweise 100% der Stirnseitenfläche verschweißt sein können. Eine solche zumindest näherungsweise vollständige Verschweißung kann höchste Festigkeiten erzielen.

Die Schweißnaht kann dabei auch eine etwas größere Fläche und/oder einen etwas größeren Durchmesser als der Gewindebolzen selbst besitzen, wenn sich eine Schweißwulst über den Außenumfang des Gewindebolzens hinaus erstreckt. In Weiterbildung der Erfindung besitzt die Schweißnaht zwischen Gewindebolzen und Arbeitswerkzeugteil einen Durchmesser im Bereich von 80% bis 140%, insbesondere etwa 95% bis 120% des Durchmessers des Gewindebolzens und/oder eine Schweißnahtfläche im Bereich von 80% bis 140%, insbesondere etwa 95% bis 120% der Querschnittsfläche des Gewindebolzens. Durch eine solche Gestaltung der Schweißnaht kann einerseits eine hohe Schweißnahtfestigkeit erzielt, andererseits ein übermäßiger Wärmeeintrag und damit ein zu hohes Rissbildungsrisiko vermieden werden.

Um die Stirnseite des Gewindebolzens gleichmäßig und vollflächig mit dem Arbeitswerkzeugteil zu verschweißen, kann der beim und/oder nach dem Wegziehen des Gewindebolzens gezündete Lichtbogen durch ein quer zur Gewindebolzenlängsachse wirkendes Magnetfeld abgelenkt werden, sodass der Lichtbogen nicht nur den erhabenen und/oder höchsten Abschnitt der Bolzenstirnfläche beaufschlagt, sondern auch daran angrenzende Abschnitte überstreicht. Insbesondere kann in Weiterbildung der Erfindung der Lichtbogen durch ein um die Bolzenlängsachse umlaufendes Magnetfeld, dessen Stärke zunehmend erhöht werden kann, spiralförmig vom Zentrum des Gewindebolzens ausgehend über weiter außen liegende Stirnseitenabschnitte geführt werden.

Die Schweißnaht zwischen Gewindebolzen und Arbeitswerkzeugteil wird vorteilhafterweise ohne die Zugabe von Schweißzusätzen ausgebildet, sodass die Schweißnaht alleine aus einem Gemisch der Arbeitswerkzeugteil- und Gewindebolzenlegierungen besteht.

Das Arbeitswerkzeugteil kann dabei aus einem hochlegierten Metallwerkstoff bestehen und/oder oberflächenvergütet und/oder ggfs. auch durchgehärtet sein. Vorteilhafterweise ist der genannte Gewindebolzen direkt auf eine Rückseite des Arbeitswerkzeugteils aufgeschweißt, die der vom Erdreich und/oder Erntegut überstrichenen Arbeitsfläche des Arbeitswerkzeugteils gegenüberliegen kann. Je nach Ausbildung des Verschleißteils kann der Gewindebolzen auch auf derselben Seite wie die Arbeitsfläche angeordnet sein, wobei der Gewindebolzen in diesem Fall jedoch vorteilhafterweise in einem nicht vom Erdreich und/oder Erntegut überstrichenen Arbeitswerkzeugteilabschnitt angebracht ist.

Die Erfindung wird nachfolgend anhand eines bevorzugten Ausführungsbeispiels und zugehöriger Zeichnungen näher erläutert. In den Zeichnungen zeigen:
- Fig. 1:: Einen Pflugkörper, der in Teilansicht (a) von seiner Arbeitsseite her und in der Teilansicht (b) schräg von oben her gezeigt ist,
- Fig. 2:: Ein Streichblech mit daran angeschweißten Gewindebolzen zum Befestigen an einem Werkzeugträger, wobei die Teilansicht (a) die Vorderund Arbeitsseite des Streichblechs und die Teilansicht (b) die Rückseite des Streichblechs mit den daran angeschweißten Gewindebolzen zeigt, und
- Fig. 3:: Eine ausschnittsweise vergößerte Darstellung des Arbeitswerkzeugteils aus den vorhergehenden Figuren und eines Gewindebolzens während des Schweißvorgangs.

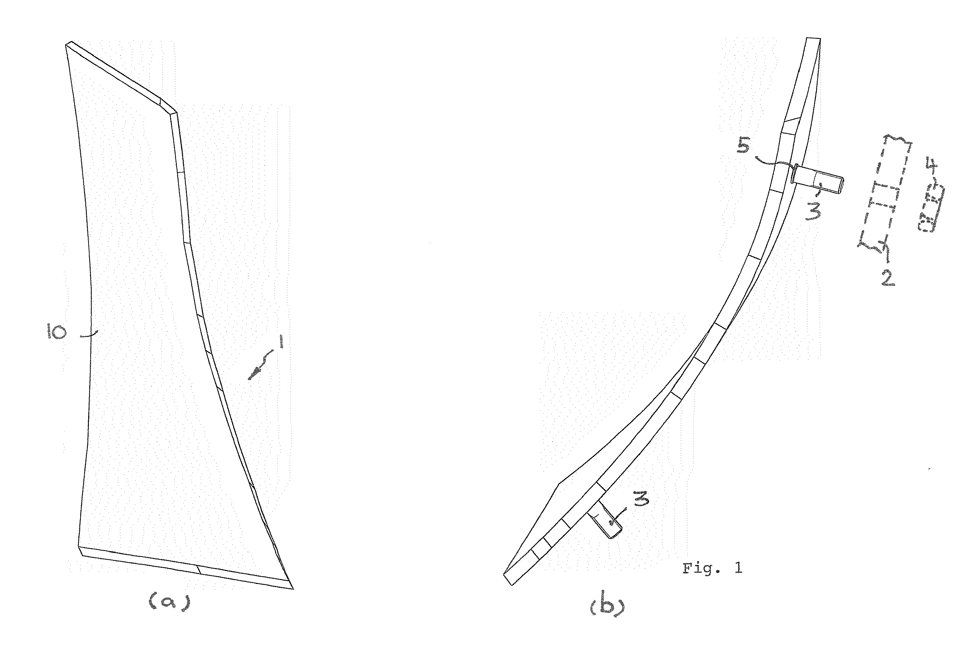

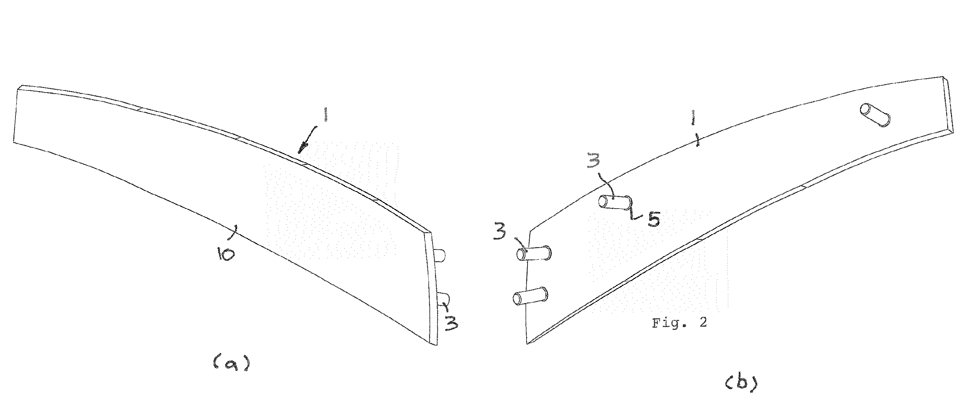

Wie die Figuren 1 und 2 zeigen, kann das Arbeitswerkzeugteil 1 als dünner plattenförmiger Korpus beispielsweise in Form eines Blechprofilteils ausgebildet sein, das relativ großflächig ausgebildet sein kann und eine vom Erdreich oder Erntegut überstrichene Arbeitsfläche 10 besitzen, die von einer der Flachseiten gebildet sein kann. Insbesondere kann das Arbeitswerkzeugteil 1 einen Pflugkörper oder ein Streichblech bilden, wie dies die Figuren 1 und 2 zeigen.

Das genannte Arbeitswerkzeugteil 1 kann dabei durch einen oder mehrere Gewindebolzen 3 an einen Werkzeugträger 2 formschlüssig und kraftschlüssig lösbar befestigt werden, wobei der genannte Werkzeugträger 2 beispielsweise als Pflugscharträger ausgebildet sein kann. Wie eingangs erwähnt, können jedoch auch andere als Verschleißteil konzipierte Arbeitswerkzeugteile einer Bodenbearbeitungsoder Gründlandmaschine in entsprechender Weise befestigt sein.

Die genannten Befestigungsbolzen 3 können dabei auf einer der Arbeitsflächen 10 gegenüberliegenden Rückseite des Arbeitswerkzeugteils 1 angeordnet sein. Der Werkzeugträger 2 kann mehrere Durchgangsbohrungen bzw. -ausnehmungen aufweisen, um die Gewindebolzen 3 durch den Werkzeugträger 2 hindurchstecken und dort mit einer Befestigungsmutter 4 anziehen zu können, sodass die Rückseite des Arbeitswerkzeugsteils 1 gegen den Werkzeugträger 2 gespannt und daran formschlüssig und kraftschlüssig befestigt ist.

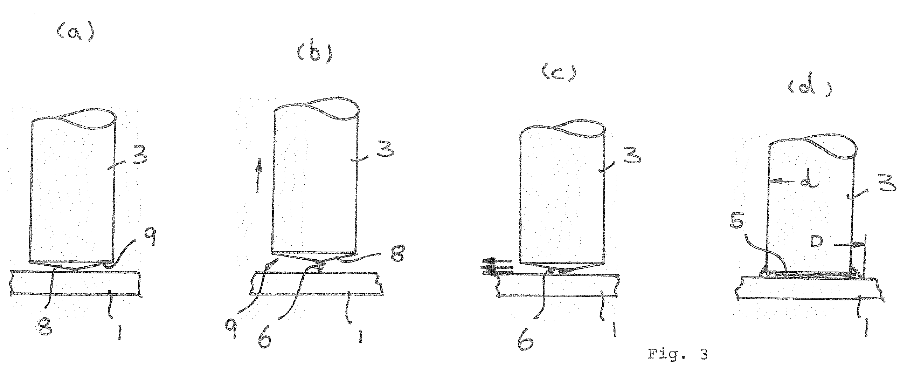

Die genannten Gewindebolzen 3 werden dabei an der Oberfläche des Arbeitswerkzeugteils 1 angeschweißt, wie dies Fig. 3 zeigt.

Vorteilhafterweise werden hierbei Gewindebolzen 3 verwendet, deren Stirnseite 9 erhaben bzw. ballig, insbesondere kegelig ausgebildet ist, sodass die Stirnseite 9 einen zentralen erhabenen Bereich aufweist und der Zentralbereich der Stirnseite 9 dem Arbeitswerkzeugteil 1 am nächsten kommt.

Wie Fig. 3a zeigt, wird der Gewindebolzen 3 zunächst im Wesentlichen senkrecht mit seiner Stirnseite 9 auf die Rückseite des Arbeitswerkzeugteils 1 angesetzt. Der Gewindebolzen 3 und das Arbeitswerkzeugteil 1 werden sodann mit elektrischen Schweißspannung beaufschlagt, wobei der Gewindebolzen 3 wieder ein Stück weit von dem Arbeitswerkzeugteil 1 weggezogen wird, wie dies Fig. 3b verdeutlicht. Hierbei kann der Gewindebolzen 3 selbst bewegt, aber auch das Arbeitswerkzeugteil 1 vom Gewindebolzen 3 wegbewegt werden, wobei auch beide Teile bewegt werden können, um die Relativbewegung beider Teile zu erzielen. Die in Fig. 3b dargestellte Wegzieh- bzw. Abhubbewegung kann einige wenige µm oder auch einige Zehntel Milimeter betragen, beispielsweise 2 Zehntel bis 3 Zehntel.

Wie Fig. 3b verdeutlicht, wird hierbei ein Lichtbogen 6 ausgebildet, der sich zunächst im Bereich des erhabenen Zentralbereichs der Stirnseite 9 bildet und zu einem Aufschmelzen dieses zentralen, erhabenen Stirnseitenabschnitts und einem partiellen Aufschmelzen der Oberfläche des Arbeitswerkzeugteils 1 führt.

Durch die Erhabenheit des Zentralbereichs schmilzt dieser im Wesentlichen vollständig auf, sodass das Schweißbad sich verteilen kann. Zudem kann, wie dies Fig. 3c verdeutlicht, der Lichtbogen 6 mit einem quer zur Längsachse des Gewindebolzens 3 wirkenden Magnetfeld 7 beaufschlagt werden, sodass der Lichtbogen 6 vom erhabenen Zentralbereich weg nach außen gezogen wird. Das genannte Magnetfeld 7 kann hierbei pulsierend und/oder umlaufend und/oder mit zunehmender Stärke betrieben werden, sodass der Lichtbogen 6 spiralförmig auch die weiter außen liegenden Bereiche der Stirnseite 9 und den entsprechenden Gegenabschnitten des Arbeitswerkzeugteils 1 überstreicht, vgl. Fig 3c.

Hierdurch bildet sich eine im Wesentlichen vollständig sich über die Stirnseite 9 erstreckende Schweißnaht 5, die auch eine geringfügig über den Außenumfang des Gewindebolzens 3 überstehende Randwulst ausbilden kann. Der Durchmesser D der Schweißnaht 5 kann vorteilhafterweise im Bereich von 1,0 bis 1,2 d betragen, wobei d den Durchmesser des Gewindebolzens 3 angibt.

## Patentansprüche

1. Landwirtschaftliche Maschine zur Boden- und/oder Erntegutbearbeitung, mit einem mit dem Boden und/oder Erntegut in Eingriff bringbaren Arbeitswerkzeugteil (1), das als Verschleißteil konzipiert ist und an einem Werkzeugträger (2) lösbar befestigt ist, wobei an dem Arbeitswerkzeugteil (1) zumindest ein Gewindebolzen (3), der zum lösbaren kraft- und formschlüssigen Befestigen des Arbeitswerkzeugteils (1) am Werkzeugträger (2) vorgesehen ist, starr befestigt ist, **dadurch gekennzeichnet, dass** der Gewindebolzen (3) allein mit seiner Stirnseite (9) und direkt an dem Arbeitswerkzeugteil (1) angeschweißt ist.

2. Landwirtschaftliche Maschine nach dem vorhergehenden Anspruch, wobei die Schweißnaht (5) zwischen Arbeitswerkzeugteil (1) und Gewindebolzen (3) sich vollflächig über die Stirnseite des Gewindebolzens (3) erstreckt.

3. Landwirtschaftliche Maschine nach einem der vorhergehenden Ansprüche, wobei die Schweißnaht (5) einen Durchmesser (D) im Bereich von 80% bis 140%, insbesondere 95% bis 120% des Durchmessers (d) des Gewindebolzens (3) besitzt.

4. Landwirtschaftliche Maschine nach einem der vorhergehenden Ansprüche, wobei die Schweißnaht (5) eine Schweißnahtfläche im Bereich von 80% bis 140%, insbesondere 95% bis 120% der Querschnittsfläche des Gewindebolzens (3) aufweist.

5. Landwirtschaftliche Maschine nach einem der vorhergehenden Ansprüche, wobei die Schweißnaht (5) frei von Schweißzusätzen ausgebildet ist und allein aus einem Gemisch der Arbeitswerkzeugteil- und Gewindebolzenlegierungen besteht.

6. Landwirtschaftliche Maschine nach einem der vorhergehenden Ansprüche, wobei das Arbeitswerkzeugteil (1) aus einem hochlegierten, oberflächenvergüteten Metallwerkstoff besteht, an dem direkt der Gewindebolzen (3) angeschweißt ist.

7. Landwirtschaftliche Maschine nach einem der vorhergehenden Ansprüche, wobei das Arbeitswerkzeugteil (1) durch eine auf den Gewindebolzen (3) aufgeschraubte Befestigungsmutter (4) kraftschlüssig gegen eine Oberfläche des Werkzeugträgers (2) gespannt ist.

8. Landwirtschaftliche Maschine nach einem der vorhergehenden Ansprüche, wobei das Arbeitswerkzeugteil (1) ein Pflugkörper oder ein Streichblech eines Pflugs ist.

9. Verfahren zum Befestigen eines Arbeitswerkzeugteils (1) an einem Werkzeugträger (2) einer gemäß einem der vorhergehenden Ansprüche ausgebildeten landwirtschaftlichen Maschine, **dadurch gekennzeichnet, dass** ein Gewindbolzen (3) mit einer uneben ausgebildeten Stirnseite (9) an das Arbeitswerkzeugteil (1) gesetzt wird, ferner an das Arbeitswerkzeugteil (1) und den Gewindebolzen (3) eine elektrische Schweißspannung gelegt und der Gewindebolzen (3) ein Stück weit vom Arbeitswerkzeugteil (1) abgehoben wird, sodass ein die Stirnseite (9) des Gewindebolzens (3) und/oder die Oberfläche des Arbeitswerkzeugteils (1) partiell aufschmelzender Lichtbogen (6) erzeugt wird und der Gewindebolzen allein mit seiner Stirnseite (9) und direkt an dem Arbeitswerkzeugteil (1) angeschweißt wird.

10. Verfahren nach dem vorhergehenden Anspruch, wobei als anzuschweißender Gewindebolzen (3) ein an seiner Stirnseite (9) ballig, insbesondere kegelig ausgebildeter und/oder mit einer zentralen Erhöhung versehener Gewindebolzen (3) verwendet wird.

11. Verfahren nach einem der beiden vorhergehenden Ansprüche, wobei der Lichtbogen (6) durch ein quer zur Gewindebolzenlängsachse wirkendes Magnetfeld (7) abgelenkt wird.

12. Verfahren nach dem vorhergehenden Anspruch, wobei das Magnetfeld (7) um die Gewindebolzenlängsachse umlaufend und/oder pulsierend und/oder derart vorgesehen wird, dass der Lichtbogen (6) von einem zentralen, erhabenen Stirnseitenabschnitt des Gewindebolzens ausgehend spiralförmig über weiter außen liegende Stirnseitenabschnitte geführt wird.
